# EUROPEAN PATENT SPECIFICATION

(11) **EP 1 747 123 B1**
(45) Date of publication and mention of the grant of the patent: **27.01.2010**
(21) Application number: 05735619.8
(22) Date of filing: 20.04.2005
(51) Int. Cl.: B60R 21/34, E05D 3/06

(54) **SAFETY HINGE FOR FRONT CAR BONNETS**
SICHERHEITSSCHARNIER FÜR PKW-MOTORHAUBEN
CHARNIERE DE SECURITE DESTINEE A DES CAPOTS AVANT DE VOITURES

(30) Priority: 13.05.2004 ES 200401148
(43) Date of publication of application: 31.01.2007
(60) Divisional application: 09177798.7
(73) Proprietor: Flexngate Automotive Iberica, S.A., 08520 Les Franqueses Del Valles (ES)
(72) Inventor: NICOLAS DOMINGO, Joaquin, E-08390 Montgat (ES)
(74) Representative: Sugrañes Patentes y Marcas
(86) International application number: PCT/EP2005/004251
(87) International publication number: WO 2005/113301

(56) References cited:
- DE-A1- 10 136 901
- DE-A1- 19 948 459
- PATENT ABSTRACTS OF JAPAN vol. 1999, no. 04, 30 April 1999 (1999-04-30) -& JP 11 020740 A (NISSAN MOTOR CO LTD), 26 January 1999 (1999-01-26)

## Description

### Technical field of the invention

The invention relates to a safety hinge for front car bonnets, of the type which comprise a push-bar which forms part of the vehicle's bonnet, joined to the vehicle's chassis for opening and closing the bonnet via at least one hinged point, which is displaced when the bonnet receives an impact which is stronger than a predetermined value.

### Background of the invention

In order to minimize the harm a car may cause to a pedestrian, especially in the event of a head-on collision between the car and the pedestrian, some cars have systems for absorbing part of the force of the impact or collision, so that the pedestrian does not receive such a severe blow when hit by the vehicle.

To that effect, different devices are known whereby the front bonnets of cars, upon receiving an impact of a predetermined force, absorb part of the force of the impact by being displaced to cushion the reaction force that the bonnet might apply to the pedestrian.

The former rigid articulations whereby the bonnet was fixed to the chassis of the vehicle are being replaced by hinges which allow opening and closing of the bonnet under normal conditions, so that they are substantially displaced when the bonnet receives an impact upon hitting a pedestrian, and also displacing the part of the bonnet close to the hinge to absorb some of the force of the impact.

The patent documents EP 1178917 and WO 03/012233 disclose different devices wherein the bonnet is joined to the chassis of the vehicle via a double-jointed hinge, so that the bonnet is joined to the chassis via two bars connected by articulated joints to the bonnet and the chassis, respectively. One of the bars is deformed plastically in the event of an impact and separates into two parts, which may or may not remain attached by means of an articulation, in such a way that the other bar can turn around its articulated joint with the chassis, the bonnet being displaced, its movement not being limited by the bar that has been deformed or broken. This solution, however, only applies to devices with double-jointed hinges.

Unlike previous documents, the hinge device described in patent document US 6588526 introduces elastic means, such as a spring, whereon the hinged point is supported in such a way that it is displaced upon receiving an impact. However, the use of springs becomes a problem since the hinged point, when not fixed to the vehicle's chassis, can produce vibrations when the car is moving, causing continued rattling or other form of noise.

A constructional example of a hinge for a front car bonnet, of the type that are permanent and firmly fixed to the chassis of the vehicle, is described in document DE 10116716 A1. Said hinge shows an articulated structure albeit as part of a bonnet lifting device based on an energy accumulator with adjusting member to raise up the bonnet in event of collision with e.g. a pedestrian.

Documents DE 10136901 and DE 20314057U both describe respective safety hinges according to the preamble of claim 1.

### Explanation of the invention

In order to provide a solution to the aforementioned problems, the safety hinge being the object of the invention will be disclosed. The safety hinge for front car bonnets in the invention comprises a push-bar which forms part of the vehicle's bonnet, joined to the vehicle's chassis for opening and closing the bonnet via a hinged point which is displaced when the bonnet receives an impact which is stronger than a predetermined value.

The hinged point is joined to the vehicle's chassis via a structure, originally fastened to the chassis by at least two joining points, one of these being displaced when the bonnet receives the impact while the second is articulated, whereby upon the structure being displaced by the first joining point, the structure turns around the articulated point, pulling the hinged point in its movement.

Such characteristics of the structure enable the hinge to move in the event of an impact in such a way that said hinged point pulls the bonnet in its movement.

The structure preferably comprises, in the joining point which can be displaced with respect to the chassis, a detaching body, removably coupled in a hollow housing which forms part of the vehicle's chassis, whose cavity has a similar configuration to that of the detaching body and is adapted to tightly house the latter.

In a embodiment of the invention, the detaching body is essentially tubular in shape and the housing has an opening which is narrower than the diameter of the detaching body, whereby the latter is forced through the opening, via plastic or elastic deformation of the detaching body and/or of the housing.

The invention is further characterized in that the structure which supports the hinged point is formed by two bars joined together in an articulated way, the joining articulated point with the chassis being on either one of the two bars, that the hinged point is on the end of a first bar and that the joint between the bars is on an intermediate point between said hinged point and the opposite end of said first bar, joined to the chassis.

In another embodiment of the invention the two joining points of the bars, when both are joined to the chassis, and the join of the bars, form an imaginary triangle whose base is the imaginary joining line between the points joining the bars to the chassis, wherein the dihedral angles formed by the remaining sides of the triangle and said base are, respectively, acute angles.

In accordance with another preferred embodiment, that does not form part of the claimed invention, the push-bar is joined to the structure by two hinged points.

Another characteristic of said last embodiment, that does not form part of the claimed invention, is that the structure which supports the two hinged points is formed by two bars whereon on one of their respective ends is a corresponding hinged point while their other respective ends are joined in an articulated way to a support bar, the support point articulated with the chassis being on one of the ends of the support bar, while the displaceable joining point is on the other end.

### Brief description of the drawings

The attached drawings show, in a non-limitative way, four diagrammatic forms of embodiment of the hinge being the object of the invention and two preferred examples of embodiment. In said drawings:
- Figs. 1 and 2: are respective diagrammatic forms of embodiment of the hinge of the invention, with a hinged point;
- Fig. 3: is a diagrammatic form of known a hinge;
- Fig. 4: is a side view of a preferred example of embodiment of the hinge of the invention in a position with the bonnet closed, corresponding to the diagrammatic embodiment in Fig. 1;
- Fig. 5: is a side view of the hinge in Fig. 4 in a position with the bonnet open;
- Fig. 6,: is a side view of the hinge in Figs. 4 and 5 with the structure which joins it to the chassis of the vehicle being displaced;
- Fig. 7: is another diagrammatic embodiment of a hinge not forming part of the claimed invention, with two hinged points; and
- Fig. 8,: is a side view of a hinge, in a position with the bonnet closed, corresponding to the diagrammatic embodiment in Fig. 7.

### Detailed description of the drawings

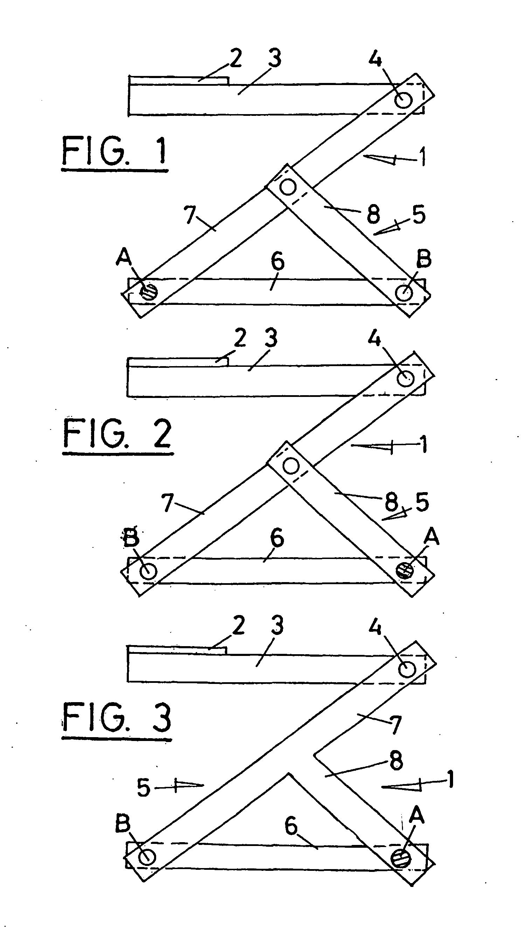

In Figs. 1 and 2 respective diagrammatic forms of embodiment of the safety hinge 1 are described for front bonnets 2 of cars in accordance with the invention. In all of these, it can be seen that the safety hinge 1 is essentially made up of the following elements: a push-bar 3 joined by a first end to the bonnet 2 and joined by its other end to a hinged point 4, around which said push-bar 3 can be turned in both directions, corresponding with the turn of the bonnet between a closed position and an open position; and a structure 5 which supports the hinged point 4 and which is fixed to the chassis 6 of the vehicle by two joining points, A and B respectively, wherein point A is displaced when the bonnet 2 receives an impact greater than a predetermined value, and point B is articulated, all this being adapted in such a way that when point A is displaced, the structure 5 turns around point B displacing the hinged point 4 and the bonnet 2 downwards.

In Fig. 1, which corresponds to a first diagrammatic embodiment, it can be seen that the structure 5 is formed by two bars 7 and 8, a detaching bar 7 and a support bar 8, respectively, joined together in an articulated way, displaceable point A being situated on the detaching bar 7, and the articulated point B being situated on the support bar 8.

In Fig. 2, which corresponds to a second diagrammatic embodiment, it can be seen that the structure 5 is similar to that in the first embodiment in Fig. 1, only differing in the fact that the displaceable point A is situated on the support bar 8, and the articulated point B is situated on the detaching bar 7

In Fig. 3, which corresponds to a diagrammatic example, known from DE 203 14 057 U, it can be seen that the structure 5 is similar to that of the first and second embodiments represented in Figs. 1 and 2, respectively, the embodiment in Fig. 3 differing mainly from the embodiment in Fig. 2 by the fact that the detaching bar 7 and the support bar 8 are joined in a non-articulated way, or simply form part of the same body. Naturally, in a practical embodiment, instead of bars 7 and 8, the structure 5 could be formed by a single body or block, for which reason, the structure 5 is designed to be formed, for example, by an essentially flat, rigid sheet whereon points A, B and the hinged point 4 would be situated.

In the three forms of embodiment described, it can be seen that points A and B and the join between the detaching bar 7 and the support bar 8 form an imaginary triangle, on the base whereof is an imaginary line which links the joining points of the bars 7 and 8 with the chassis, and the angles formed by said bars 7 and 8 with the base are acute.

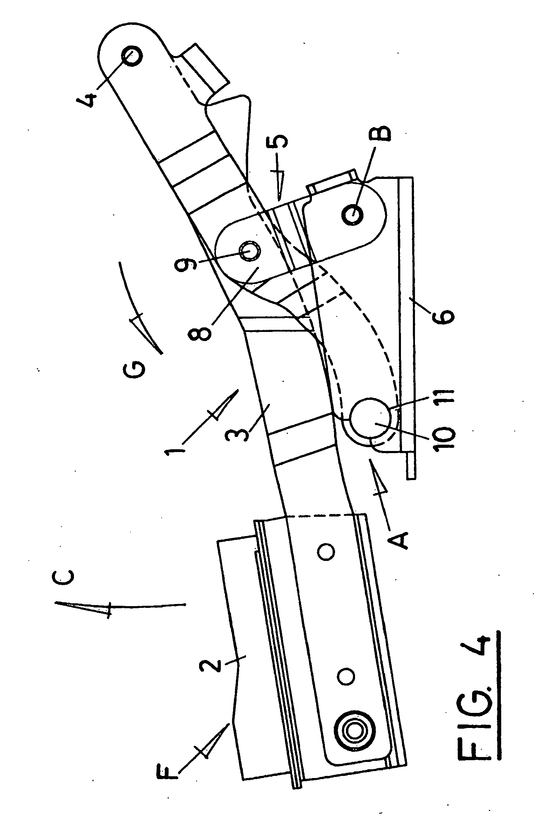

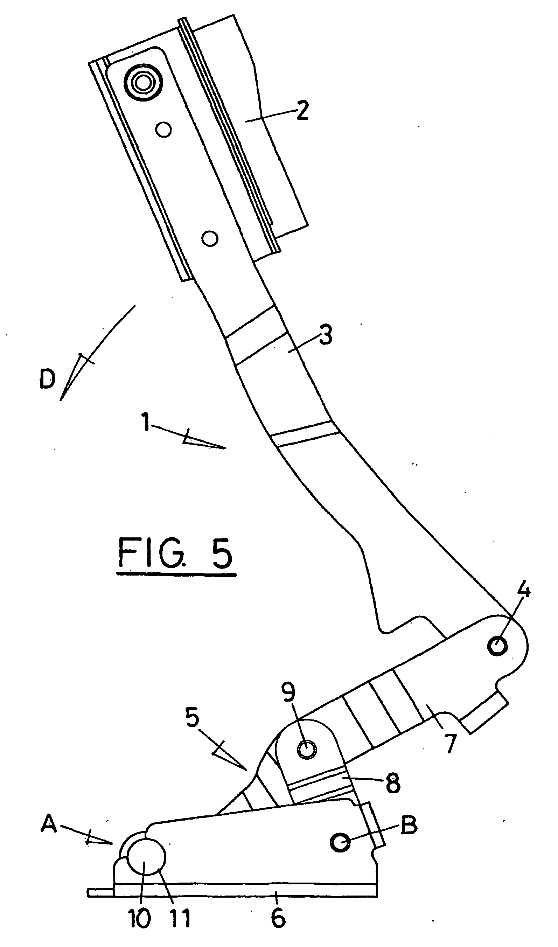

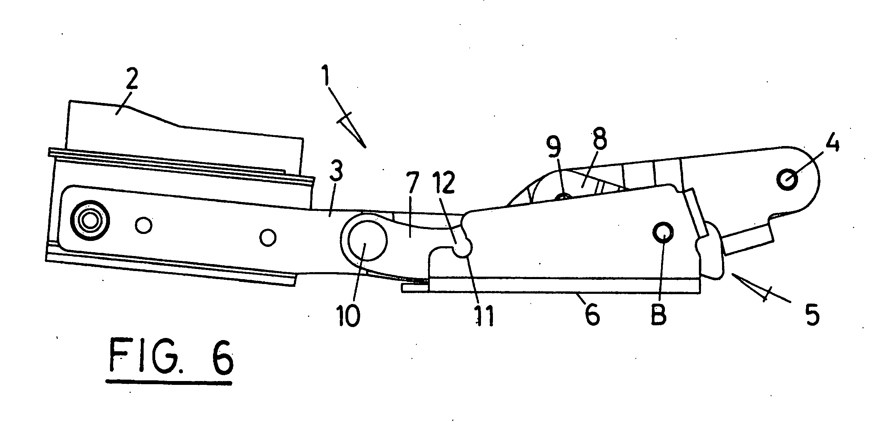

As indicated above, in Figs. 4, 5 and 6 an example of embodiment is represented which corresponds to the first diagrammatic embodiment of the safety hinge for front car bonnets according to the invention. In Figs. 4, 5 and 6 the hinge 1 is represented in different operating positions: in Fig. 4 the hinge 1 is represented in a position with the bonnet 2 closed ; in Fig. 5 the hinge 1 is represented in a position with the bonnet 2 open; and in Fig. 6 the hinge 1 is represented after the bonnet 2 of the vehicle has received an impact.

To help simplify the following description, the same numerical references have been used in Figs. 1, 2 and 3 to indicate the same or similar components of the safety hinge of the invention.

In Figs. 4 and 5, it can be seen that the safety hinge 1 comprises a push-bar 3 joined by a first end to the bonnet 2, while its other end is joined to a hinged point 4 supported by a structure 5 fixed to the chassis 6, all this adapted in such a way that the bonnet 2 can be turned around the hinged point 4 in both directions indicated as C in Fig. 4, in order to open it, and as D in Fig. 5, in order to close it.

The structure 5 is made up of a detaching bar 7 and a support bar 8. One of the ends of the detaching bar 7 is joined in an articulated way to the push-bar 3 forming the hinged point 4, while its other end is joined to the chassis 6 and forms the displaceable joining point A, which is described below. One of the ends of the support bar 8 is joined in an articulated way to an intermediate point 9 on the detaching bar 7, while its other end is joined in an articulated way to the chassis 6 of the vehicle and forms articulation point B, all this adapted in such a way that the support bar 8 can turn around the articulation point B and around the intermediate point 9, and in each case, in both directions, in the event of impact.

The structure 5 includes, on the displaceable point A, a detaching body 10 which generally has a tubular cylindrical shape which forms part of the detaching bar 7 and which is removably coupled to a housing 11 with an opening 12, represented in Fig. 6, and which is on the chassis 6; all this being adapted in such a way that the detaching body 10 is forced through the opening 12, via plastic or elastic deformation of the detaching body 10. It is understood that the elements forming the displaceable point A can adopt other configurations, for example, that forcing of the detaching body through the opening is done essentially via the plastic deformation of the housing, or via the simultaneous plastic deformation of the detaching body and the housing.

It is noted here that the join between the structure 5 and the chassis 6 of the vehicle can be direct, whereby the housing 11 and the articulation point B would form part of, or would be integrated in, the chassis itself, or indirectly, via an auxiliary intermediate body forming part of the chassis 6 of the vehicle, with the aforementioned housing 11 and the corresponding articulated joint.

In the same way, the inventor provided for the detaching body 10 to have a deformable covering in the area where it is coupled to the housing 11, which enables the housing unit to be detached, so that the housing body 10 is not damaged or does not deteriorate so that said covering can be replaced for reuse.

An explanation of how the safety hinge for front car bonnets of the above described invention functions is given below.

In Fig. 4 the safety hinge of the invention is represented in a position with the bonnet 2 closed; in these circumstances, in order to open the bonnet 2, the user must turn it in the direction shown as C, causing the push-bar 3 to turn around the hinged point 4, until the bonnet 2 reaches the open position shown in Fig. 5. In a similar way, in order for the bonnet 2 to close, the user must turn it in the direction shown as D in Fig. 5, causing the push-bar 3 to turn around the hinged point 4, until it reaches the closed position shown in Fig. 4. It is now shown that during opening and closing of the bonnet 2 the hinged point 4 has maintained its position with respect to the chassis 6.

If there is an impact on the bonnet 2, such as that produced, for example, by a collision with a pedestrian, the hinge functions as follows. Said impact produces a force F, shown in Fig. 4, applied to the bonnet 2 which is transmitted to the push-bar 3 and through the hinged point 4 to the detaching bar 7; if said force F reaches an intensity of a predetermined value, the detaching body 10 is forced out of its housing 11 in the chassis 6, and at the same time the support bar 8 turns around the articulation point B in the direction shown as G in Fig. 4, until the hinge 1 reaches the detaching position shown in Fig. 6, wherein the hinged point 4 occupies a position on the chassis 6 below which it previously occupied at the time the bonnet 2 received said impact, in such a way managing to reduce the harm that may have been suffered by the pedestrian as a result of the collision.

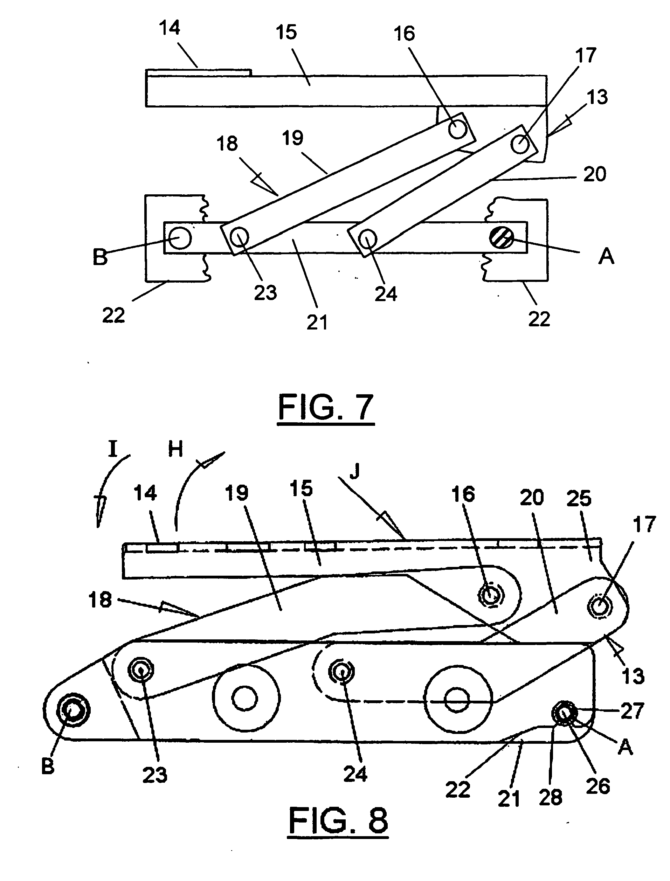

Fig. 7 diagrammatically shows a safety hinge 13 for front bonnets 14 of cars which does not form part of the claimed invention. It can be seen that the safety hinge 13 is essentially made up of the following elements: a push-bar 15 joined by a first end to the bonnet 14 and joined by its other end to a first and second hinged point, 16 and 17 respectively; and a structure 18 which supports the two hinged points 16 and 17 and which is fixed to the chassis 22 of the vehicle at two joining points, A and B respectively, being point A displaceable when the bonnet 14 receives an impact greater than a predetermined value and the articulated point B, all this adapted to so that, in a similar way to what was explained earlier for the embodiments in Figs. 1 to 3, when point A is displaced, the structure 18 turns around point B, the hinged points 16 and 17 and the bonnet 14 being displaced downwards.

The structure 18 is formed by a first and second bar, 19 and 20 respectively, and by a support bar 21. From these bars, the first bar 19 has one of its ends connected to the first hinged point 16 while its other end is joined in an articulated way to a first intermediate point 23 of the support bar 21; the second bar 20 has one of its ends joined to the second hinged point 17 while its other end is joined in an articulated way to a second intermediate point 24 of the support bar 21; and the support bar 21 is joined by its ends to the chassis 22 at points A and B, respectively.

In the description that follows, the same numerical references have been used as in Fig. 7 to indicate the same or similar components of the safety hinge of the invention which, as an example of embodiment, is represented in Fig. 8, the safety hinge being represented in this figure with the bonnet closed.

In Fig. 8 the safety hinge 13 can be seen to comprise a push-bar 15 joined by one of its ends to the bonnet 14, while its other end has an extension 25 whereon the first and second hinged points 16 and 17 are positioned respectively. The structure 18 comprises a first and second bar, 18 and 19 respectively, and a support bar 21. The ends of the first bar 18 are joined in an articulated way to the first hinged point 16 and to a first intermediate point 23 of the support bar 21 respectively; the second bar 20 has its ends joined in an articulated way to the second hinged point 17 and to a second intermediate point 24 of the support bar 21 respectively; and one of the ends of the support bar 21 is joined in an articulated way to the chassis 22 by point B, and its other end forms displaceable point A.

In a similar way, as explained for the example of embodiment shown in Figs. 4 to 6, the structure 18 has a detaching body 26 on the displaceable point A which generally has a tubular cylindrical shape which forms part of the support bar 21, and which is removably coupled to the chassis 22 by means of a housing 27 which has an opening 28; all this being adapted in such a way that the detaching body 26 is forced through the opening 28 via plastic or elastic deformation of the detaching body 26.

The functioning of the hinge of the invention represented in Fig. 8 does not essentially differ from the one explained earlier for the embodiment represented in Figs. 4 to 6, and which is described in a more simplified way below.

As indicated, Fig. 8 represents the safety hinge 13 of the invention in the position with the bonnet 14 closed. To open the bonnet 14 the user must turn it in the direction shown as H, causing the bars 19 and 20 to turn around the articulated points 23 and 24 connected to the support bar 21 while the bonnet, in a compound movement, turns in the direction shown by the arrow H in Fig. 8; obviously, in order for the bonnet 14 to close by reaching the position shown in Fig. 8 it turns in the opposite direction to before, i.e. in the direction shown as I. It is noted in this point that, during opening and closing of the bonnet, 14 the support bar 21 maintains its position with respect to the vehicle's chassis 22.

If there is an impact against the bonnet 14, such as that produced by hitting a pedestrian, said impact produces a force shown as J in Fig. 8 which is transmitted to displaceable point A by displacement of the push-bar 15, which runs up against the support bar 21 causing, if said impact is greater than a predetermined value, the detaching body 26, which has a support bar, to be forced out of its housing 27 in the chassis 22 of the vehicle, and consequently the displacement of the bonnet 14 downwards, in such a way reducing the harm that may be suffered by the pedestrian as a result of the collision.

## Claims

1. Safety hinge (1) for front bonnets (2) of cars, which comprises a push-bar (3) which forms part of the bonnet (2) of the vehicle, joined to the vehicle's chassis for opening and closing the bonnet (2) by one hinged point (4) which is displaced when the bonnet (2) receives an impact greater than a predetermined value, said hinged point (4) being joined to the vehicle's chassis (6) by means of a structure (5), originally fixed to the chassis by at least two joining points (A, B), one of these (A) being displaceable when the bonnet (2) receives the impact while the second (B) is articulated, whereby upon the structure (5) being displaced by the first joining point (A), the structure turns around the articulated point (B), pulling the hinged point (4) in its movement, the safety hinge being **characterized in that** the structure (5) which supports the hinged point (4) is formed by two bars (7, 8) joined together in an articulated way, the articulated joining point (B) with the chassis (6) being on either of them; **in that** the hinged point (4) is on the end of a first bar (7); and **in that** the joint (9) between the bars is on an intermediate point between said hinged point (4) and the opposite end of said first bar, joined to the chassis.

2. Safety hinge (1) according to claim 1, **characterized in that** the structure (5) comprises, in the joining point (A), which is displaceable with respect to the chassis (6), a detaching body (10), removably coupled to a hollow housing (11) which forms part of the vehicle's chassis (6), whose cavity has a similar configuration to that of the detaching body (10) and is adapted to tightly house the latter.

3. Safety hinge (1) according to claim 2, **characterized in that** the detaching body (10) is essentially tubular in shape and the housing (11) has an opening (12) which is narrower than the diameter of the detaching body, whereby the latter is forced through the opening via plastic or elastic deformation of the detaching body and/or of the housing.

4. Safety hinge (1) according to any of the preceding claims, **characterized in that** the joining points (A, B) of the bars (7, 8), when both are joined to the chassis (6), and the joint of the bars, forms an imaginary triangle whose base is the imaginary joining line between the points (A, B) joining the bars (7, 8) to the chassis, wherein the dihedral angles formed by the remaining sides of the triangle and said base are, respectively, acute angles.

## Patentansprüche

1. Sicherheitsscharnier (1) für Fronthauben (2) von Automobilen, welches eine Druckstange (3) umfasst, welche Teil der Haube (2) des Fahrzeugs ist, die mit dem Fahrgestell des Fahrzeugs zum Öffnen und Schließen der Haube (2) durch eine Gelenkstelle (4) verbunden ist, welche sich verschiebt, wenn die Haube (2) einen Aufprall erfährt, der größer als ein vorbestimmter Wert ist, wobei die genannte Gelenkstelle (4) mit dem Fahrgestell (6) des Fahrzeugs durch eine Struktur (5) verbunden ist, die ursprünglich an dem Fahrgestell durch zumindest zwei Verbindungsstellen (A, B) befestigt ist, wobei eine (A) davon verschiebbar ist, wenn die Haube (2) den Aufprall erfährt, während die zweite (B) angelenkt ist, wobei mit dem Verschieben der Struktur (5) durch die erste Verbindungsstelle (A) sich die Struktur um die angelenkte Stelle (B) herum dreht, wobei sie die Gelenkstelle (4) in ihrer Bewegung mitzieht, **dadurch gekennzeichnet, dass** die Struktur (5), welche die Gelenkstelle (4) trägt, durch zwei Stangen (7, 8) gebildet ist, die gelenkig miteinander verbunden sind, wobei die angelenkte Verbindungsstelle (B) mit dem Fahrgestell (6) sich auf einer davon befindet; dass die Gelenkstelle (4) sich auf dem Ende einer ersten Stange (7) befindet; und dass die Verbindung (9) zwischen den Stangen sich auf einer Zwischenstelle zwischen der genannten Gelenkstelle (4) und dem entgegengesetzten Ende der genannten ersten Stange befindet, und mit dem Fahrgestell verbunden ist.

2. Sicherheitsscharnier (1) nach Anspruch 1, **dadurch gekennzeichnet, dass** die Struktur (5) an der Verbindungsstelle (A), welche bezüglich des Fahrgestells (6) verschiebbar ist, einen Abziehkörper (10) umfasst, der entfernbar an ein hohles Gehäuse (11) angeschlossen ist, welches Teil des Fahrgestells (6) des Fahrzeugs ist, dessen Aushöhlung eine Ausbildung hat, die jener des Abziehkörpers (10) ähnlich ist, und dazu angepasst ist, letzteren eng aufzunehmen.

3. Sicherheitsscharnier (1) nach Anspruch 2, **dadurch gekennzeichnet, dass** der Abziehkörper (10) im Wesentlichen rohrförmig ist, und das Gehäuse (11) eine Öffnung (12) hat, welche enger als der Durchmesser des Abziehkörpers ist, wobei letzterer durch eine plastische oder elastische Verformung des Abziehkörpers und/oder des Gehäuses durch die Öffnung gezwängt wird.

4. Sicherheitsscharnier (1) nach einem der vorherigen Ansprüche, **dadurch gekennzeichnet, dass** die Verbindungsstellen (A, B) der Stangen (7, 8), wenn beide mit dem Fahrgestell (6) verbunden sind, und die Verbindung der Stangen, ein imaginäres Dreieck bilden, dessen Grundlinie die imaginäre Verbindungslinie zwischen den Stellen (A, B) ist, welche die Stangen (7, 8) mit dem Fahrgestell verbindet, bei dem die durch die restlichen Seiten des Dreiecks und die genannte Grundlinie gebildeten V-Winkel jeweils spitze Winkel sind.

## Revendications

1. Charnière de sécurité (1) pour capots avant (2) de voiture, qui comprend une barre-poussoir (3) qui fait partie du capot (2) du véhicule, unie au châssis du véhicule pour ouvrir et fermer le capot (2) par un point à charnière (4) qui se déplace lorsque el capot (2) reçoit un impact supérieur à une valeur prédéterminée, ledit point à charnière (4) étant uni au châssis du véhicule (6) par le biais d'une structure (5), originellement fixée au châssis par au moins deux points d'union (A, B), dont l'un (A) est déplaçable lorsque le capot (2) reçoit l'impact tandis que l'outre (B) est articulé, ce qui fait que lorsque la structure (5) est en train d'être déplacée par le premier point d'union (A), la structure tourne autour du point articulé (B) en tirant sur le point à charnière (4) lors de son mouvement, la charnière de sécurité étant **caractérisée en ce que** la structure (5) qui supporte le point à charnière (4) est formée par deux barres (7, 8) unies ensemble d'une manière articulée, le point d'union articulé (B) avec le châssis (6) étant sur l'une d'elles ; **en ce que** le point à charnière (4) est à l'extrémité d'une première barre (7) ; et **en ce que** le joint (9) entre les barres est sur un point intermédiaire entre ledit point de charnière (4) et l'extrémité opposée de ladite première barre, unie au châssis.

2. Charnière de sécurité (1) selon la revendication 1, **caractérisée en ce que** la structure (5) comprend, sur le point d'union (A) étant déplaçable par rapport au châssis (6), un corps de séparation (10) accouplé amoviblement à un logement creux (11) qui fait partie du châssis du véhicule (6) dont la cavité a une configuration similaire à celle du corps de séparation (10) et s'adapte pour loger de manière ajustée ce dernier.

3. Charnière de sécurité (1) selon la revendication 2, **caractérisée en ce que** le corps de séparation (10) a essentiellement une forme tubulaire et le logement (11) a une ouverture (12) qui est plus étroite que le diamètre du corps de séparation, ce qui fait que ce dernier est forcé à travers l'ouverture par déformation plastique ou élastique du corps de séparation et/ou du logement.

4. Charnière de sécurité (1) selon l'une quelconque des revendications précédentes, **caractérisée en ce que** les points d'union (A, B) des barres (7, 8), lorsque les deux sont unies au châssis (6), et le joint des barres, forment un triangle imaginaire dont la base est la ligne d'union imaginaire entre les points (A, B) unissant les barres (7, 8) au châssis, dans lequel les angles dièdres formés par les outres côtés du triangle et ladite base sont, respectivement, des angles aigus.
